# EUROPÄISCHE PATENTANMELDUNG

(11) **EP 1 303 012 A2**
(43) Veröffentlichungstag der Anmeldung: **16.04.2003**
(21) Anmeldenummer: 02450215.5
(22) Anmeldetag: 23.09.2002
(51) Int. Cl.: H01R 31/06

(54) **Verteiler mit mehreren Steckdosen**

(30) Priorität: 11.10.2001 AT 7802001
(71) Anmelder: Geyer Import-Export Gesellschaft m.b.H., 1100 Wien (AT)
(72) Erfinder: Geyer, Peter, 1100 Wien (AT)
(74) Vertreter: Beer, Manfred, Dipl.-Ing.

(57) **Zusammenfassung**

Ein Verteiler in Form einer Verteiler (1) mit mehreren Anschlußstellen besitzt Anschlußstellen (2) für 230 Volt und Anschlußstellen (10) für Niederspannung (6 bis 15 Volt), wobei die Anschlußstellen (2, 10) einzeln oder in Gruppen, voneinander unabhängig mit Spannung versorgt werden können. Die Steuerung des erfindungsgemäßen Verteilers, der auch eine Zeitschaltuhr enthalten kann, erfolgt mit Hilfe eines integrierten Bedienfeldes (4) und/oder über einen USB-Anschluß (20) über einen Rechner.

## Beschreibung

Die Erfindung betrifft einen Verteiler mit mehreren Steckdosen.

Bisher bekannte Verteiler (Tischverteiler) erlauben es mehrere Geräte anzuschließen. Dabei ist es auch bekannt, Steckdosen des Tischverteilers mit einem gemeinsamen Schalter oder gesonderten Schaltern an das Netz anzuschließen, oder vom Netz zu trennen. Es ist auch bekannt, den Schalter von bekannten Tischverteilern mit einer Lichtquelle zu kombinieren, so dass er z.B. rot leuchtet, wenn die Steckdosen der bekannten Tischverteiler an das Netz angeschlossen sind.

Der Erfindung liegt die Aufgabe zu Grunde einen Tischverteiler mit mehreren Steckdosen anzugeben, der universell einsetzbar ist, und bei dem die Steckdosen einzeln und voneinander unabhängig und wahlweise direkt, zeitgesteuert und/oder gruppenweise an das Netz angeschlossen, also mit Spannung versorgt werden können.

Gelöst wird diese Aufgabe mit einem Verteiler, mit den Merkmalen des Anspruches 1.

Bevorzugte und vorteilhafte Ausgestaltungen der Erfindung sind Gegenstand der Unteransprüche.

Bei dem erfindungsgemäßen Verteiler, der über mehrere Anschlussmöglichkeiten verfügt, können die an den Verteiler angeschlossenen Geräte immer dann, und zwar unabhängig voneinander, mit Strom versorgt werden, wenn sie benötigt werden.

Beispielsweise kann der erfindungsgemäße Verteiler bis zu fünfzehn Anschlussmöglichkeiten mit 230 V verfügen.

In einer Ausführungsform ist der erfindungsgemäße Verteiler mit wenigstens einem integrierten Netzgerät ausgestattet, und es sind beispielsweise drei Anschlußstellen mit 6 bis 15 V vorgesehen. Dies erlaubt es, ohne dass jeweils ein eigenes Netzgerät benötigt wird, einen PC/Notebook und zugehörigen Peripheriegeräte, wie Monitor, Drucker, Scanner, aktiven USB HUB, ForceFeed Joystick und verschiedene Zusatzlaufwerke, Streamer, CD, CD-Brenner, DVD, Funkmaus, ISDN/Modem/Tel/Fax/-Anrufbeantworter anzuschließen und jeweils bei Bedarf mit Strom zu versorgen.
Die Steuerung des erfindungsgemäßen Gerätes kann entweder über ein in das Gerät integriertes Tastenfeld oder über USB von einem Rechner aus erfolgen. Der Schnittstellenteil über einen USB-Eingang, der mit dem PC verbunden wird, der USB-Steckverbinder ist am Gerät beispielsweise frontseitig angeordnet. Der Schnittstellenteil kann, wie der Programmierteil über eine serielle 2-Draht-Verbindung (I2C-ähnlich) mit dem Timermodul verbunden sein. Das ermöglicht, die Verwendung eines kostengünstigen, vierpoligen RJ5-Spiralkabels zur Verbindung mit dem System wenn das Schnittstellenteil entnehmbar sein soll.

Dabei ist in einer Ausführungsform vorgesehen, dass das in dem Verteiler der Erfindung integrierte Schaltfeld, z.B. ein Tastenschaltfeld mit LCD-Anzeige abgenommen werden kann, so dass eine Fernbedienung möglich ist. Wenn das Tastenfeld von dem erfindungsgemäßen Gerät abgenommen ist, kann die dadurch gebildete Öffnung im Verteiler durch eine Abdeckung verschlossen werden.

In einer Ausführungsform ist das erfindungsgemäße Gerät mit einer Lichtquelle versehen, die gesondert geschaltet werden kann, und das Bedienen des Gerätes, insbesondere das Anstecken von Verbrauchern bei Dunkelheit vereinfacht.

Bei dem erfindungsgemäßen Verteiler können einzelne oder mehrere Anschlussstellen 230 V oder die Netzgerätanschlüsse mit 6 bis 15 V Gleichstrom mit Zeitschaltern (Timern) kombiniert sein, so dass beispielsweise über das in den Verteiler integrierte Tastenfeld und/oder über einen über USB angeschlossenen Rechner bestimmt werden kann, ob und wann angeschlossene Geräte mit Strom versorgt werden und wann nicht.

In einer weiteren Ausführungsform kann vorgesehen sein, dass der erfindungsgemäße Verteiler über eine Fernsteuerung, über das Telefon Infrarot, Blue-Tooth oder über eine ISDN-Anlage ferngesteuert wird, d.h. ausgewählte Anschlüsse (Steckdosen oder Netzgerätanschlüsse) ein- bzw. ausgeschaltet werden.

Zusätzlich kann der erfindungsgemäße Verteiler über einen Hauptschalter bzw. einen beleuchteten Wippschalter zu Gänze ein- oder ausgeschaltet werden.

Das Ein-/Ausschalten der einzelnen Verbraucher und der Beleuchtung ist in einer Ausführungsform programmierbar, vorzugsweise durch einen externen Computer über eine USB-Schnittstelle oder das erwähnte interne und wahlweise abnehmbare Bedienteil mit LCD-Anzeige und Bedienelementen (Tasten).

In einer Ausführungsform kann bei dem erfindungsgemäßen Verteiler ein Netzabgang (Steckdose) eine Masterfunktion übernehmen und fallweise die anderen Netzabgänge (Slave) auf Grund des Masterstromverbrauches und der Programmierung ein/ausschalten. Darüber hinaus wird es dem Benutzer ermöglicht, Geräte, die an einer gemeinsamen Leiste angeschlossen sind, in frei definierbarer Gruppe zugleich zu schalten.

Sobald das Hauptgerät (Master) eingeschaltet wird, werden automatisch die definierten Anschlüsse (Slaves) mit eingeschaltet.

Die einzelne oder allen Anschlüssen zugehörende Schaltuhr kann so ausgebildet sein, dass sie im Wochentakt arbeitet, wobei die kleinste Zeiteinheit beispielsweise eine Minute ist. So wird dem Benutzer ermöglicht, Geräte, die an der erfindungsgemäßen Stecker-Leiste angeschlossen sind, einzeln und frei definierbar zeitgesteuert zu schalten, wobei für jede einzelne Steckdose der Leiste mehrere Timer ein/aus Schaltzeiten angegeben werden können.

Die Schaltzeitpunkte können wahlweise für alle Tage, Einzeltage, Werktage, oder das Wochenende bestimmt werden.

Die in einer Ausführungsform in den erfindungsgemäßen Verteiler eingebauten Netzteile können für die interne Stromversorgung des Verteilers für die Beleuchtung desselben und für die Niederspannungsanschlüsse herangezogen werden. Dabei besteht die Möglichkeit jeden der Niederspannungsanschlüsse durch einen Drehschalter auf die gewünschte Spannung, beispielsweise 6 V oder 9 V oder 12 V oder 15 V, gegebenenfalls stufenlos einzustellen. Wenn die erfindungsgemäße Steckerleiste mit einem Netzgerät ausgestattet ist, und beispielsweise drei Netzgeräteanschlüsse mit 6 bis 15 V zur Verfügung stehen, die durch einen Drehschalter auf die gewünschte Spannung, beispielsweise 6 V oder 9 V oder 12 V oder 15 V, gegebenenfalls stufenlos eingestellt werden können, und direkt als Slave oder Tuner geschalten werden, ist es möglich, ohne daß jeweils ein eigenes Netzgerät benötigt wird, ein Notebook oder Peripheriegeräte wie Drucker, Scanner, aktive USB-HUBS, Joysticks, verschiedene Zusatzlaufwerke, wie CD, DVD, CD-Brenner, Funk-Tastatur/Maus, ISDN Modem/A-B-Wandler, Funk-Kopfhörer, Telefon/Fax/Anrufbeantworter, diverse Weihnachtsbeleuchtung, beleuchtbare Wanduhren, etc. anzuschließen, und bei Bedarf mit Strom zu versorgen.

Die Stromversorgung des erfindungsgemäßen Verteilers erfolgt beispielsweise über eine fix angeschlossene (dreipolige) Leitung, wobei die Netzabsicherung durch eine in dem Verteiler eingebaute Sicherung bzw. eine Glasrohrsicherung, die von Aussen zugänglich ist, erfolgen.

In einer Ausführungsform des erfindungsgemäßen Verteilers kann eine Netzfilterung vorgesehen sein, wobei der Netzfilter aus zwei Y1 Kondensatoren (1nF), zwei X1 Kondensatoren (100nF) und einer stromkompensierten Drossel 230 V/16 A bestehen kann.

Zusätzlich kann in den erfindungsgemäßen Verteiler ein Überspannungsschutz üblicher Bauweise integriert sein.

Netzüberspannungsschutz: Grobschutz in der Zuführung und den Ableitungen durch SIOV-Varistoren, Feinschutz in den Ableitungen durch schnelle Halbleiter.

Niederspannungsüberspannungsschutz: Feinschutz in den Ableitungen durch schnelle Halbleiter.

Es ist noch darauf hinzuweisen, dass die Steckdosen für 230 V beispielsweise über Relais geschaltet werden. Dabei kann die Ansteuerung der Relais über die Schaltuhr, über das Tastenfeld oder über eine USB-Schnittstelle von einem Rechner aus erfolgen.

Das Gehäuse des erfindungsgemäßen Verteilers oder wenigstens ein Teil desselben, vorzugsweise ein oberer Teil des Gehäuses, kann aus durchscheinendem Werkstoff (Kunststoff) bestehen, so dass durch eine eingebaute Lichtquelle, beispielsweise eine Niederspannungsglühlampe das gesamte Gerät von Innen her beleuchtet ist. Die Aktivierung der Beleuchtung erfolgt entweder über einen gesonderten Schalter oder über eine Schaltuhr, ist aber auch als "Slave" programmierbar. Die Ausführung des erfindungsgemäßen Verteilers mit integrierter Lichtquelle dient der einfacheren Handhabung beim Anstecken/Ausstecken von Geräten, und als Beleuchtung der gesamten Steckerleiste in der transparenten Kunststoff-Ausführung als (von innen her) und kann direkt an der Leiste eingeschaltet und als Timer und in Gruppe (Master/Slave) angegeben (programmiert) werden. Das in einer Ausführungsform transluzente (färbige aber lichtdurchlässige) Gehäuse der erfindungsgemäßen Schaltleiste ermöglicht in einer Ausführungsform durch die zentrale Anordnung einer handelsüblichen und kostengünstigen Niederspannungsglühlampe das ganze Gerät von innen heraus "leuchten" zu lassen. Die Aktivierung der Beleuchtung erfolgt entweder direkt durch eine Taste (die erste Betätigung schaltet die Beleuchtung ein, die zweite schaltet die Beleuchtung aus, die dritte Betätigung schaltet die Beleuchtung wieder ein, usw). Weiters ist die Beleuchtung auch über eine Zeitschaltuhr und als "SLAVE" programmierbar.

Das in dem erfindungsgemäßen Verteiler allenfalls vorgesehene Timermodul beinhaltet die notwendige Elektronik für die gesamte interne Ablaufsteuerung, der Ansteuerung der Netzrelais, der Beleuchtung und der Schaltelemente für die Niederspannungsausgänge. Ebenso versorgt das Timermodul alle Leuchtdioden, die der Anzeige von Zuständen dienen und nimmt die Schaltbefehle der integrierten Bedienungstasten auf und verarbeitet sie weiter. Das Timermodul kann über eine serielle Zwei-Drahtverbindung (I2C-ähnlich) mit dem Programmierteil (alternativ mit dem Schnittstellenteil) verbunden sein.

Das Schaltfeld des erfindungsgemäßen Verteilers kann ein LCD-Display und die Bedienungstasten für die manuelle Bedienung aufweisen. Dieser Programmierteil ist alternierend zum Schnittstellenteil ausgeführt, wenn die Programmierung nicht über einen externen Rechner sondern von Hand aus, unmittelbar am Verteiler, ausgeführt werden soll.

Zur Vereinfachung der Bedienung kann das Bedienfeld (Programmierteil) über eine Leitung mit dem eigentlichen Verteiler verbunden und abnehmbar sein, wobei die Verbindung beispielsweise über ein Spiralkabel erfolgt. Beispielsweise enthält der Programmierteil neben den LCD-Display zwölf Tasten für die Bedienung und die Programmierung des erfindungsgemäßen Verteilers.

Der im erfindungsgemäßen Verteiler gegebenenfalls vorgesehene Schnittstellenteil verfügt über einen USB-Eingang, der mit einem Rechner (PC) verbunden wird. Dabei ist der USB-Steckverbinder auf einer der Seitenflächen (vorzugsweise einer Schmalseite) des erfindungsgemäßen Verteiler angeordnet.

Die in einer Ausführungsform in dem erfindungsgemäßen Verteiler vorgesehene Schaltuhr kann auch mit einem Schallwandler, beispielsweise mit einem Piezo-Schallwandler gekuppelt werden, so dass der erfindungsgemäße Verteiler als auch Wecker dienen kann.

Die Programmierung des erfindungsgemäßen Gerätes erlaubt es auch in bestimmten Zeiten einen oder mehrere Abgänge zu sperren.

In einer Ausführungsform bietet die erfindungsgemäße Steckerleiste bis zu fünfzehn 230 V Anschlüsse. Acht in zwei Reihen angeordnete Schutzkontakt-Steckdosen, davon können sieben Schutzkontakt-Steckdosen als Multi-Steckdosen ausgeführt sein, wobei zwei Eurostecker in einer Schutzkontakt-Steckdose passen und die direkt, als Slave oder Timer geschaltet werden.

Die erfindungsgemäße Steckerleiste kann auch einreihig ausgebildet sein und bietet z.B. elf Anschlüsse. Sechs in einer Reihe angeordnete Schutzkontakt-Steckdosen, davon fünf Schutzkontakt-Steckdosen als Multi-Steckdosen ausgeführt, wobei zwei Eurostecker in eine Schutzkontakt-Steckdose passen, und die direkt, als Slave oder Timer geschaltet werden.

Da Tischverteiler (Steckerleisten) oft auch an schlecht zugänglichen Plätzen aufgestellt werden (am Boden, hinter dem Schreibtisch, hinter Geräten in Regalen etc.) kommt der Bedienung/Handhabung eine wesentliche Bedeutung zu.

In der PC-USB-Konfiguration kann die erfindungsgemäße Steckerleiste mittels USB-Kabel am PC angeschlossen werden und mittels Software angesteuert/geschaltet/eingestellt werden. Das separate Bedienteil ist hier nicht notwendig.

Ist der PC nicht mit einem USB-Anschluß ausgestattet, oder wird die erfindungsgemäße Steckerleiste zu einem anderen Zweck, wie z.B. bei Stereo-/Video-Anlagen oder anderes eingesetzt, so ist es dem Benutzer ermöglicht, die erfindungsgemäße Steckerleiste über das Tastenfeld mit LCD-Display zu bedienen, also auf den jeweils gewünschten Zustand einzustellen.

Eine Kontrolle der Einstellungen der erfindungsgemäßen Steckerleiste ist in der USB-Version mittels PC-Software möglich, wobei am Monitor der aktuelle Status angezeigt wird.

In der Bedienfeldversion wird der aktuelle Status am Tastenfeld des Bedienteils mittels Leuchtdioden angezeigt.

Die erfindungsgemäße Steckerleiste kann auch erhöhte Sicherheit und guten Schutz bieten.

Bisher waren nicht belegte Anschlußstellen an bekannten und unter Spannung stehenden Steckerleisten für Kleinkinder ein Risiko, falls mit diversen Kleinteilen herumgestochert wurde, bei der Erfindung können nicht belegte Anschlußstellen aber einfach deaktiviert werden.

In Ausführungsformen bietet das erfindungsgemäße Gerät beispielsweise wenigstens eine der nachstehenden Funktionen:
- Stromverbrauchsmessung der "MASTER"-Steckdose und Anzeige am LCD-Display.
- Zusätzlicher Einbau eines Piezo-Schallwandlers um das AT080 als "Alarm/Wecker" verwenden zu können.
- Überwachung der angeschlossenen Geräte zum Zwecke des Diebstahlschutzes.
- Einbau der Möglichkeit, zu bestimmten Zeiten einen oder mehrere Abgänge zu sperren (Kindersicherung z.B. für Fernsehgeräte u.a.).
- Steuerung per Infrarot/Funk/Blue Tooth Modul

Der erfindungsgemäße Verteiler mit mehreren Steckdosen kann auch so programmiert werden, daß z. B. ein weiteres Profil für den Betrieb von Geräten während des Wochenendes im internen Speicher des Verteilers geladen wird und erst nach einem bestimmten, vorgebbaren Zeitraum oder zu einem bestimmten, vorgebbaren Zeitpunkt aktiviert wird. Auf diese Art und Weise wird verhindert, daß ein Profil für das Ein- und Ausschalten der einzelnen Steckdosen des Verteilers, das für einen zukünftigen Zeitraum (z.B. das Wochenende) bestimmt ist, unmittelbar aktiviert wird und derzeit noch benötigte Geräte, z.B. ein Computer oder ein Drucker unerwünscht stromlos schaltet. Diese Programmiermöglichkeit erlaubt es, daß zukünftige Schaltungen des Verteilers vorab programmiert werden, um beispielsweise über ein Wochenende oder während eines vorgegebenen Zeitraumes nur bestimmte, ausgewählte Geräte, beispielsweise einen Telefonanrufbeantworter und/oder ein Telefaxgerät, mit Strom zu versorgen.

Weitere Einzeleinheiten und Merkmale des erfindungsgemäßen Verteilers ergeben sich auch der nachstehenden Beschreibung bevorzugte Ausführungsbeispiele unter Bezugnahme auf die angeschlossenen Zeichnungen.

Es zeigt:
Fig. 1 in Draufsicht eine Ausführungsform des erfindungsgemäßen Verteilers mit Bedienfeld;
Fig. 2 den Verteiler aus Fig. 1 in Seitenansicht;
Fig. 3 eine andere Ausführungsform eines erfindungsgemäßen Verteilers;
Fig. 4 den Verteiler von Fig. 3 in Seitenansicht; und
Fig. 5 einen Schaltplan.

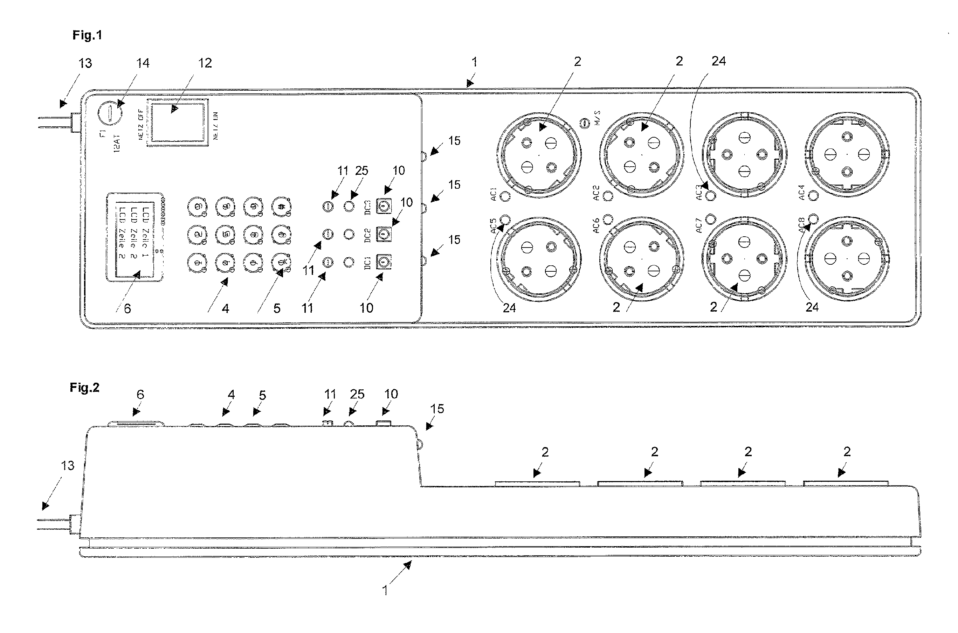

Bei der in den Fig. 1 und 2 gezeigten Ausführungsform, besitzt der erfindungsgemäße Verteiler 1 acht, in zwei nebeneinander liegenden Reihen angeordnete Steckdosen 2, die einzeln und voneinander unabhängig mit 230 V beaufschlagt werden können. Neben jeder Steckdose 2 ist eine Leuchtdiode 24 angeordnet, die aufleuchtet, wenn die ihr zugeordnete Steckdose 2 eingeschalten ist.

In einem erhöhten Teil des Gehäuses des Verteilers 1 ist ein Bedienfeld 4 vorgesehen mit Bedientasten 5 und einem Display 6, das beispielsweise als LCD-Display ausgeführt sein kann. Weiters sind bei den Fig. 1 und 2 gezeigten Ausführungsform drei über eingebaute Netzgeräte mit Gleichspannunng versorgte Anschlüsse 10 vorgesehen. Jedem der Netzgerätanschlüsse 10 ist ein (Dreh-)Schalter 11 zugeordnet, mit dem die an den jeweiligen Anschluss 10 angelegte Spannung auf den gewünschten Wert, beispielsweise 6, 9, 12 oder 15 V, gegebenenfalls stufenlos eingestellt werden kann. Dabei ist jeder Schalter 11 neben dem ihm funktionell zugeordneten Netzgerätanschluss 10 angeordnet. Jedem Anschluß 10 ist eine Leuchtdiode 25 zugeordnet, die leuchtet, wenn der ihr benachbarte Netzgerätanschluß 10 mit 6/9/12 V eingeschaltet ist.

Des weiteren ist in dem Verteiler ein Hauptschalter 12 vorgesehen, mit dem der gesamte Verteiler von der über die Leitung 13 zugeführten Spannung getrennt werden kann.

Im Gehäuse des Verteilers 1 ist noch eine Sicherung 14 vorgesehen. Beispielsweise an einer Seitenwand des erhöhten Teils des Gehäuses 1 ist wenigstens eine Lichtquelle 15, im Beispiel drei Lichtquellen, vorgesehen.

Im Bereich des Hauptschalters 12 kann auch ein Lichtschalter für die Lichtquelle 15 angeordnet sein.

Das Bedienfeld 4 mit den Tasten 5 und dem Display 6 kann abgenommen werden.

Alle Steckdosen 2 der erfindungsgemäßen Steckerleiste 1 können als Doppelsteckdosen ausgeführt sein, so daß in jede Steckdose 2 zwei Euro-Stecker eingesteckt werden können.

In einer nicht gezeigten Ausführungsform einer erfindungsgemäßen Steckerleiste weisen diese sechs in einer Reihe angeordnete Steckdosen 2 auf.

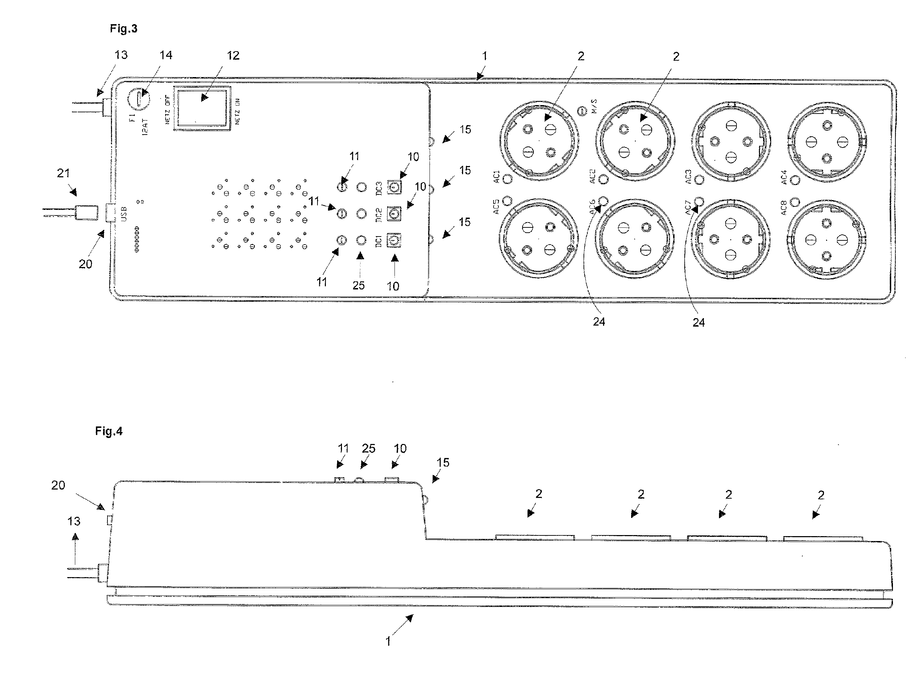

Die in den Fig. 2 und 3 gezeigte Ausführungsform einer erfindungsgemäßen Steckerleiste 1 besitzt so wie die in den Fig. 1 und 2 gezeigte Ausführungsform acht Steckdosen 2 und drei Netzgerätanschlüsse 10 mit den ihnen zugeordneten Spannungswählschaltern 11 und zeigt zusätzlich einen Anschluß 20 für ein USB-Kabel, über das die Steckerleiste 1 mit einem PC verbunden werden kann. Bei der Ausführungsform nach den Fig. 3 und 4 ist kein Bedienfeld 4 und kein Display 6 vorgesehen, da hier die Steuerung über einen angeschlossenen PC erfolgt. Freilich ist auch denkbar, die Steckerleiste 1 von Fig. 1 und 2 mit einer USB-Schnittstelle auszurichten, so daß dann die Steduerung wahlweise über das Bedienfeld (gegebenenfalls von der Steckerleiste 1 abgenommen oder über den PC erfolgen kann. Neben dem Bedienfeld 4 kann ein Schalter für die Lichtquelle 15 angeordnet sein, die auch innerhalb der oberen Gehäusehälfte angeordnet sein kann. Wenn die obere Gehäusehälfte der erfindungsgemäßen Steckerleiste 1 aus durchsichtigem oder durchscheinendem Werkstoff, der auch eingefärbt sein kann, besteht, wird bei eingeschalteter Lichtquelle 15 die Steckerleiste 1 von innen her beleuchtet, so daß ihre Bedienung, insbesondere das Ein- und Ausstecken von Verbrauchern vereinfacht ist.

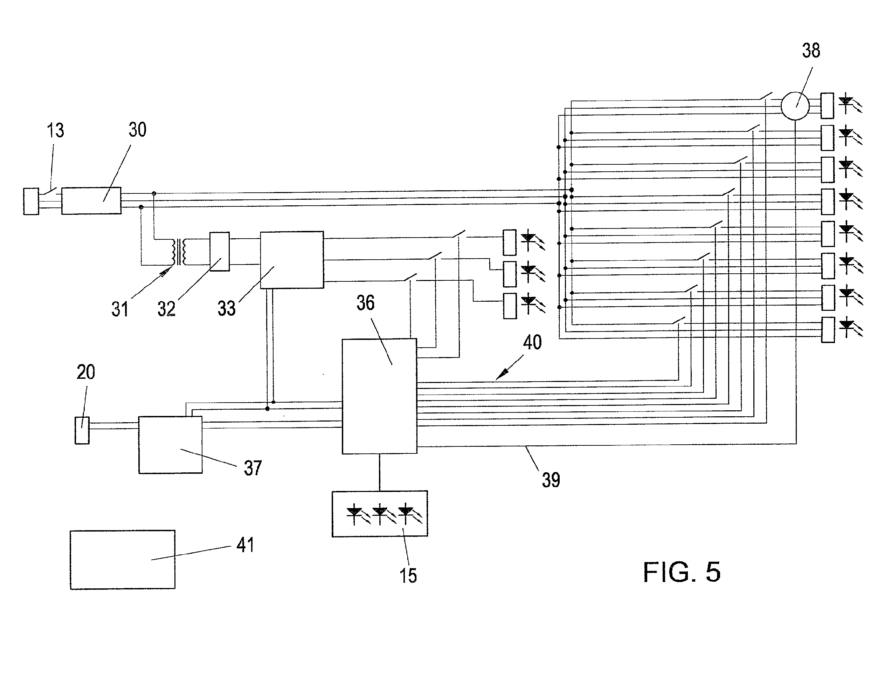

Der grundsätzliche Aufbau der elektrischen/elektronischen Schaltung des erfindungsgemäßen Verteilers wird nachstehend anhand des Schaltplanes von Fig. 5 erläutert.

Über einen Netzanschluss wird der Verteiler mit Strom versorgt. In einem Netzfilter 30 werden sämtliche Störungen, welche aus dem Netz kommen, ausgefiltert, damit die an den Verteiler angeschlossenen Geräte eine saubere Versorgung erhalten.

Um die Baugruppe niederspannungsmäßig zu versorgen, wird die eingehende Spannung von 230V in einem Transformator 31 auf 20V gewandelt. Von einem Gleichrichter 32 wird die DC-Spannung einem DC-Spannungswandler 33 aufgegeben. Dieser Spannungswandler 33 erzeugt vier unabhängige, jedoch nicht potentialgetrennte Spannungen. Diese Spannungen werden für die interne Spannungsversorgung und für die drei DC-Ausgänge 10 verwendet. Über drei Spannungsregler, welche im DC-Spannungswandler 33 eingebaut sind, können die drei DC-Ausgänge 10 unabhängig voneinander mit einer stufenlos einstellbaren Spannung versorgt werden.

Ein Prozessor 36 ist für sämtliche Echtzeitaufgaben, wie Zeitschaltuhr und Master-Slave-Umschaltung, und für die Kommunikation mit dem Programm des Verteilers zuständig. Der Prozessor 36 kommuniziert auf der einen Seite mit der USB-Kontroll-Logik 37, welche für die korrekte Signalwandlung für den USB-Aanschluss 20 verantwortlich ist. Auf der anderen Seite ist der Prozessor 36 für die Ansteuerung sämtlicher Ausgänge über die Steuerleitungen 40 zuständig. Die Ausgänge werden mittels Relais (als Schalter gezeichnet) auf die DC-Ausgänge 10 und auf die Steckdosenausgänge 2 geschalten. Jeder dieser Relais schaltet zusätzlich ein optisches Anzeigeelement (LED 24, 25) mit ein, damit erkennbar ist, welche Ausgänge geschalten sind.

Vor dem Ausgang der im Schaltplan obersten Steckdose 2 befindet sich noch ein Stromfluss-Sensor 38, welcher dem Prozessor über die Strommeldeleitung 39 einen Stromfluss auf der Master-Steckdose mitteilt.

Optionale Komponenten 41 werden entweder am USB-Anschluss 20 oder direkt am Prozessor 36 angeschlossen. Als optionale Komponenten werden der Schallgeber, das Bedienteil und das Anzeigeteil angesehen.

Die interne Beleuchtung 15 wird direkt aus dem Prozessor 36 angesteuert. Auslöser für die Beleuchtung 15 kann ein entsprechender Befehl aus dem Programm des Verteilers oder ein Tastendruck auf dem Bedienteil sein.

Zusammenfassend kann ein Ausführungsbeispiel der Erfindung wie folgt dargestellt werden:

Ein Verteiler in Form einer Steckerleiste 1 mit mehreren Anschlußstellen besitzt Anschlußstellen 2 für 230 Volt und Anschlußstellen 10 für Niederspannung (6 bis 15 Volt), wobei die Anschlußstellen 2, 10 einzeln oder in Gruppen, voneinander unabhängig mit Spannung versorgt werden können. Die Steuerung des erfindungsgemäßen Verteilers, der auch eine Zeitschaltuhr enthalten kann, erfolgt mit Hilfe eines integrierten Bedienfeldes 4 und/oder über einen USB-Anschluß 20 über einen Rechner.

## Patentansprüche

1. Verteiler (1) mit mehreren Steckdosen (2, 10), **gekennzeichnet durch** Schalter (Relais), über welche die Steckdosen (2, 10) einzeln oder in Gruppen mit Spannung beaufschlagbar sind.

2. Verteiler nach Anspruch 1, **dadurch gekennzeichnet, daß** mit 220/230 Volt beaufschlagte Steckdosen (2) und mit 6, 9, 12 oder 15 Volt beaufschlagbare Steckdosen (10) vorgesehen sind.

3. Verteiler nach einem der Ansprüche 1 oder 2, **dadurch gekennzeichnet, daß** die Steckdosen (10) für 6, 9, 12 oder 15 Volt durch ein in dem Verteiler (1) angeordnetes Netzgerät mit Spannung beaufschlagt sind.

4. Verteiler nach Anspruch 3, **dadurch gekennzeichnet, daß** jeder Steckdose (10) für 6, 9, 12 oder 15 Volt ein, gegebenenfalls stufenlos arbeitender, Spannungswählschalter (11) zugeordnet ist.

5. Verteiler nach einem der Ansprüche 1 bis 4, **dadurch gekennzeichnet, daß** für die zeitabhängige Steuerung des Beaufschiagens von Steckdosen (2, 10) mit Spannung in dem Verteiler (1) wenigstens eine Zeitschaltuhr untergebracht ist.

6. Verteiler nach einem der Ansprüche 1 bis 5, **dadurch gekennzeichnet, daß** der Verteiler (1) wenigstens einen Hauptschalter (12) aufweist.

7. Verteiler nach einem der Ansprüche 1 bis 6, **dadurch gekennzeichnet, daß** in dem Verteiler (1) zur Bedienung der Schalter in derselben ein Bedienfeld (4) mit Tasten (5) und ein Anzeigefeld (6) vorgesehen ist.

8. Verteiler nach einem der Ansprüche 1 bis 6, **dadurch gekennzeichnet, daß** in dem Verteiler (1) ein USB-Anschluß (20) vorgesehen ist, über welchen der Verteiler (1) mit Hilfe eines USB-Kabels (21) mit einem Rechner verbunden werden kann.

9. Verteiler nach einem der Ansprüche 1 bis 8, **dadurch gekennzeichnet, daß** jeder Steckdose (2, 10) eine Leuchtdiode (24, 25) zugeordnet ist.

10. Verteiler nach einem der Ansprüche 1 bis 9, **dadurch gekennzeichnet, daß** in dem Verteiler (1) innerhalb seines Gehäuses wenigstens eine Lichtquelle (15) vorgesehen ist, und daß wenigstens ein Teil des Gehäuses aus durchsichtigem/durchscheinendem Werkstoff besteht.

11. Verteiler nach Anspruch 10, **dadurch gekennzeichnet, daß** die Lichtquelle (15) durch einen gesonderten Schalter ein- und ausschaltbar ist.

12. Verteiler nach einem der Ansprüche 1 bis 11, **dadurch gekennzeichnet, daß** wenigstens eine Steckdose (2, 10) als Master und wenigstens eine weitere Steckdose (2, 10) als Slave ausgebildet ist.

13. Verteiler nach einem der Ansprüche 7 bis 12, **dadurch gekennzeichnet, daß** das Bedienfeld (4) mit den Tasten (5) und gegebenenfalls auch dem Display (6) vom Gehäuse der Verteiler (1) abnehmbar ausgebildet und über ein Kabel mit der Verteiler (1) verbunden ist.

14. Verteiler nach Anspruch 13, **dadurch gekennzeichnet, daß** in das Gehäuse anstelle des Bedienfeldes (5) und gegebenenfalls des Displays (6) eine Abdeckung einsetzbar ist.

15. Verteiler nach einem der Ansprüche 5 bis 14, **dadurch gekennzeichnet, daß** die Zeitschaltuhr mit einem Schallwandler verbunden ist.
